# EUROPÄISCHE PATENTSCHRIFT

(11) **EP 3 542 040 B1**
(45) Veröffentlichungstag und Bekanntmachung des Hinweises auf die Patenterteilung: **30.12.2020**
(21) Anmeldenummer: 18808328.1
(22) Anmeldetag: 23.11.2018
(51) Int. Cl.: F02D 9/04, F02D 9/06, F16K 27/02, F16K 31/04, F16K 31/05, F02D 9/10

(54) **STELLKLAPPE**
CONTROL FLAP
SOUPAPE DE RÉGULATION

(30) Priorität: 23.11.2017 DE 102017127740
(43) Veröffentlichungstag der Anmeldung: 25.09.2019
(73) Patentinhaber: Eberspächer Exhaust Technology GmbH & Co. KG, 66539 Neunkirchen (DE)
(72) Erfinder: ZEUMER, Annika, 73249 Wernau (DE); SCHMITT, Steffen, 73760 Ostfildern (DE); LERMER, Alexander, 78112 St. Georgen (DE); BINDER, Domenic, 78078 Niedereschach (DE); FALLER, Thomas, 78739 Hardt (DE); KAISER, Andreas, 78136 Schonach im Schwarzwald (DE)
(74) Vertreter: Ruttensperger Lachnit Trossin Gomoll
(86) Internationale Anmeldenummer: PCT/EP2018/082410
(87) Internationale Veröffentlichungsnummer: WO 2019/101945

(56) Entgegenhaltungen:
- DE-A1- 10 330 225
- DE-A1-102011 078 461
- DE-A1-102014 017 523
- DE-C1- 4 401 559
- DE-U1- 8 624 525

## Beschreibung

Die vorliegende Erfindung betrifft eine Stellklappe, die beispielsweise als Abgasklappe in einer Abgasanlage einer Brennkraftmaschine eines Fahrzeugs dazu eingesetzt werden kann, den Abgasstrom zu regulieren.

Aus der DE 10 2014 017 523 A1 ist eine als Abgasklappe ausgeführte Stellklappe bekannt. Am Außenumfang eines rohrartig ausgebildeten Klappenkörpers ist ein platten- bzw. schalenartiges Fixierteil getragen. An dem Fixierteil kann ein Antriebsgehäuse eines Schwenkantriebs für die Klappenblende durch Verschraubung festgelegt werden. In dem Fixierteil ist eine Öffnung ausgebildet, durch welche hindurch ein Antriebsorgan des Schwenkantriebs in Antriebsverbindung mit einer im Klappenkörper um eine Schwenkachse schwenkbar getragenen Schwenkwelle gebracht werden kann.

Aus der DE 44 01 559 C1 ist eine Stellklappe gemäß dem Oberbegriff des Anspruchs 1 bekannt.

Es ist die Aufgabe der vorliegenden Erfindung, eine Stellklappe, insbesondere Abgasklappe für eine Abgasanlage einer Brennkraftmaschine, mit vereinfachtem Aufbau einer zum axial festen Festlegen eines Schwenkantriebs bezüglich eines Klappenkörpers vorgesehenen Fixieranordnung vorzusehen.

Erfindungsgemäß wird diese Aufgabe gelöst durch eine Stellklappe, insbesondere Abgasklappe für den Abgasstrom einer Brennkraftmaschine, gemäß Anspruch 1. Diese Stellklappe umfasst einen Klappenkörper, eine im Inneren des Klappenkörpers an einer um eine Schwenkachse drehbaren Schwenkwelle getragene Klappenblende und einen Schwenkantrieb mit einem mit der Schwenkwelle zu koppelnden Antriebsorgan, ferner umfassend eine Fixieranordnung zur Fixierung des Schwenkantriebs bezüglich des Klappenkörpers, wobei die Fixieranordnung einen Bajonettverschluss umfasst.

Da bei dem erfindungsgemäßen Aufbau ein Bajonettverschluss zum Fixieren des Schwenkantriebs bezüglich des Klappenkörpers genutzt wird, kann der Vorgang des Fixierens einerseits einfach beispielsweise auch automatisiert durchgeführt werden. Andererseits wird für die feste Anbindung des Schwenkantriebs an den Klappenkörper nur wenig Bauraum beansprucht.

Der Bajonettverschluss umfasst an einem Antriebsgehäuse des Schwenkantriebs eine erste Bajonettformation und an einer an dem Klappenkörper vorgesehenen Fixierformation eine mit der ersten Bajonettformation durch Relativdrehbewegung aus einer Fixiervorbereitungsstellung um eine Fixierdrehachse in Fixiereingriff bringbare zweite Bajonettformation, wobei zur Erlangung eines insbesondere axial festen Zusammenhalts vorgesehen ist, dass die erste Bajonettformation eine Mehrzahl von in Umfangsrichtung um die Fixierdrehachse aufeinanderfolgenden, nach radial außen und in einer Umfangsrichtung bezüglich der Fixierdrehachse offenen, in der anderen Umfangsrichtung geschlossenen Fixiereingriffsaussparungen aufweist und die zweite Bajonettformation in Zuordnung zu jeder Fixiereingriffsaussparung einen durch die Relativ-Drehbewegung in Umfangsrichtung in eine Fixiereingriffsaussparung eingreifend positionierbaren Fixiereingriffsvorsprung umfasst.

Eine baulich einfach zu realisierende Ausgestaltung ist dadurch erreicht, dass die Fixierformation ein an dem Klappenkörper getragenes, plattenartiges Fixierteil umfasst, und dass an dem Fixierteil eine Fixieröffnung vorgesehen ist, wobei die Fixiereingriffsvorsprünge der zweiten Bajonettformation nach radial innen in die Fixieröffnung hervorstehen.

Dabei kann zur Herstellung des Fixiereingriffs die erste Bajonettformation an einem in die Fixieröffnung einführbaren Fixieransatz des Antriebsgehäuses vorgesehen sein.

Für eine einfach herzustellende Kopplung der Schwenkwelle mit dem Antriebsorgan kann vorgesehen sein, dass das Antriebsorgan den Fixieransatz durchsetzt.

Die erste Bajonettformation und die zweite Bajonettformation können die Fixierdrehachse ringartig umgebend angeordnet sein. Um im Zuge einer einfach durchzuführenden Montagebewegung einerseits das Antriebsorgan an die Schwenkwelle ankoppeln zu können, andererseits die beiden Bajonettformationen in Eingriff miteinander bringen zu können, wird weiter vorgeschlagen, dass die Fixierdrehachse der Schwenkachse entspricht.

Ein Loslösen der beiden in Fixiereingriff miteinander stehenden Bajonettformationen kann beispielsweise dadurch verhindert werden, dass eine Blockierformation vorgesehen ist zum Blockieren der beiden Bajonettformationen gegen Drehbewegung bezüglich einander bei hergestelltem Fixiereingriff. Eine derartige Blockierformation kann beispielsweise einen das Antriebsgehäuse gegen Drehbewegung um die Fixierdrehachse bezüglich der Fixierformation blockierenden Blockierbolzen, vorzugsweise Schraubbolzen, umfassen.

Ein einfach durchzuführender Montagevorgang kann dadurch weiter unterstützt werden, dass die Schwenkwelle mit dem Antriebsorgan durch Relativ-Axialbewegung in Richtung der Schwenkachse zur gemeinsamen Drehung um die Schwenkachse zu koppeln ist. Insbesondere kann dabei vorgesehen sein, dass bei in der Fixiervorbereitungsstellung bezüglich einander positionierten Bajonettformationen die Schwenkwelle mit dem Antriebsorgan zur gemeinsamen Drehung um die Schwenkachse gekoppelt ist. Somit kann durch Bewegung der Schwenkwelle bezüglich des Antriebsorgans in axialer Richtung zunächst die Drehkopplung zwischen diesen beiden zur Herstellung der Drehkopplung durch Formschluss zueinander ausgerichteten bzw. auszurichtenden Baugruppen erzeugt werden, worauf folgend durch Relativdrehung des Antriebsgehäuses bezüglich des Klappenkörpers der Fixiereingriff der beiden Bajonettformationen hergestellt werden kann.

Die vorliegende Erfindung wird nachfolgend mit Bezug auf die beiliegenden Figuren detailliert beschrieben. Es zeigt:
- Fig. 1: eine perspektivische Darstellung einer Stellklappe;

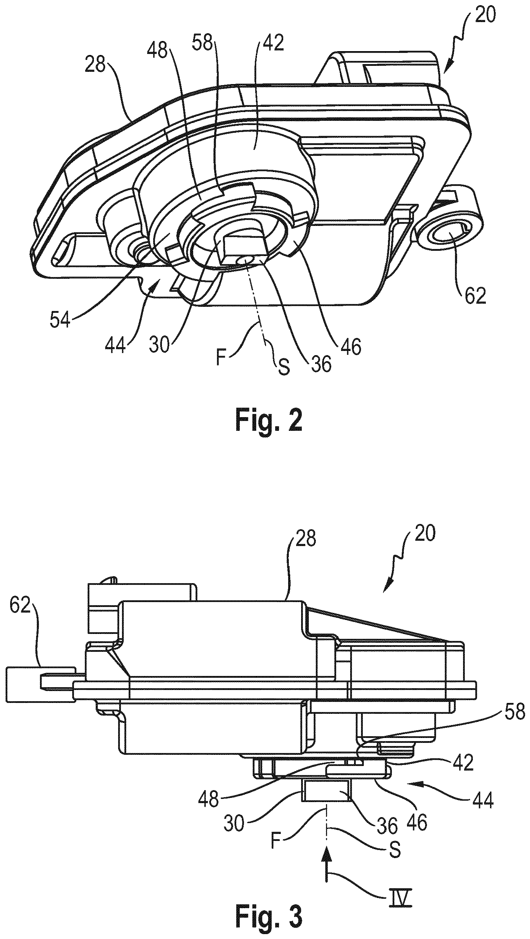

- Fig. 2: eine perspektivische Darstellung eines Schwenkantriebs der Stellklappe der Fig. 1;
- Fig. 3: eine Seitenansicht des Schwenkantriebs

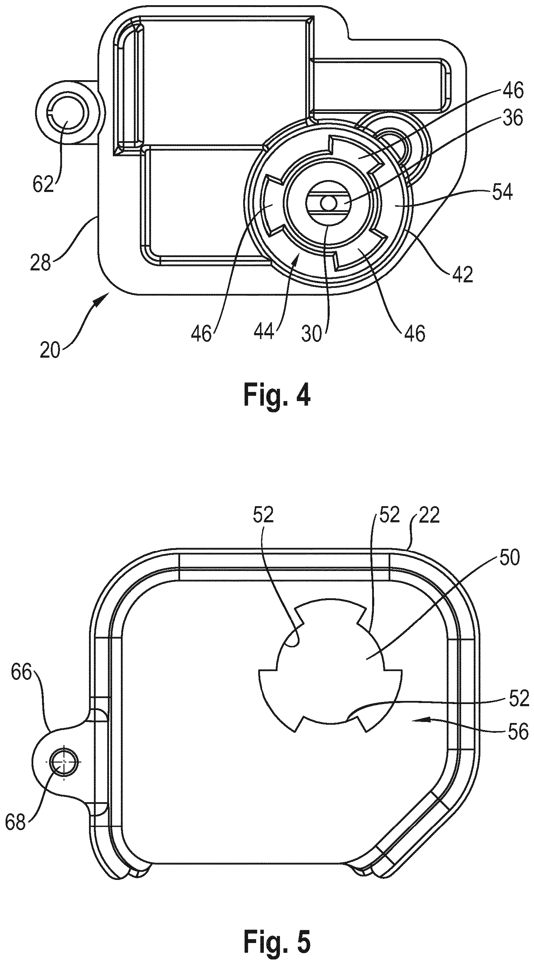

- Fig. 4: eine Ansicht des Schwenkantriebs der Fig. 2 und 3 in Blickrichtung IV in Fig. 3;
- Fig. 5: eine Draufsicht auf ein Fixierteil einer Fixierformation zum Festlegen des Schwenkantriebs an einem Klappenkörper der Stellklappe der Fig. 1;

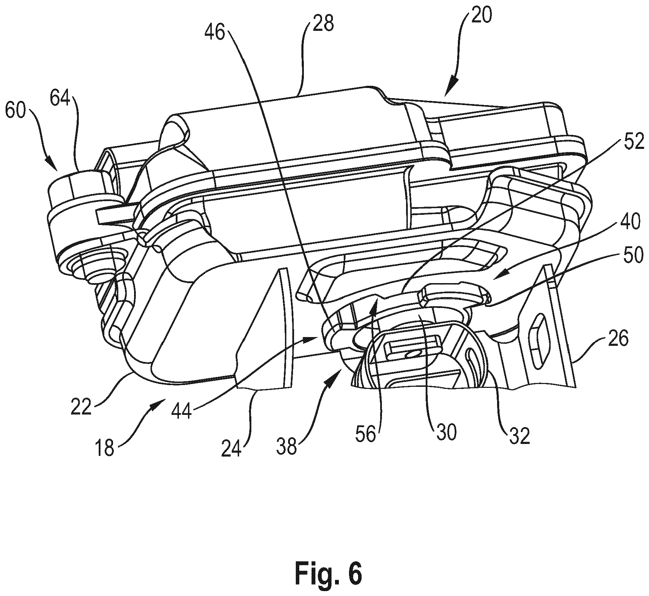

- Fig. 6: vergrößert den Bereich der Verbindung des Schwenkantriebs mit der Fixierformation.

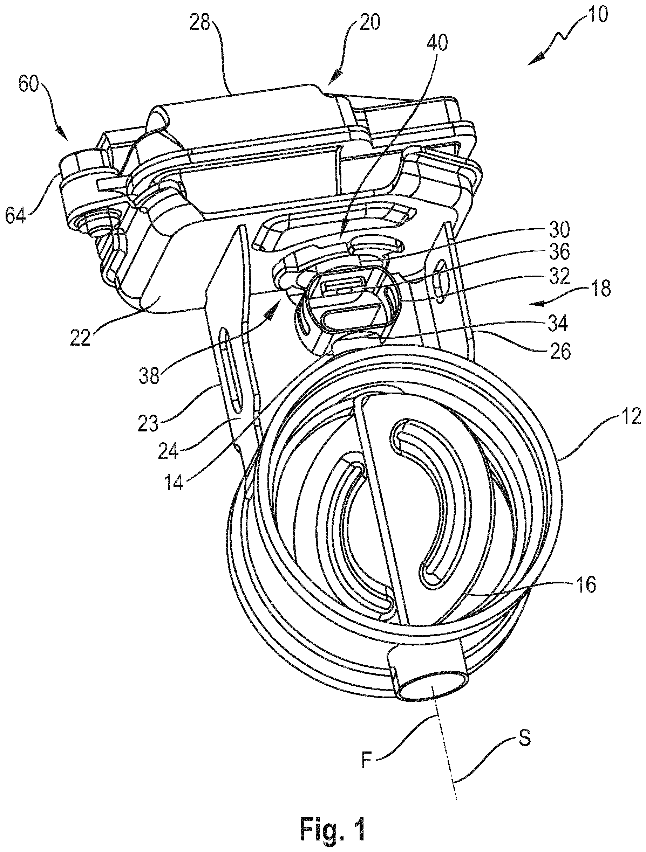

In Fig. 1 ist eine beispielsweise als Abgasklappe in einer Abgasanlage einer Brennkraftmaschine eines Fahrzeug einsetzbare Stellklappe 10 dargestellt. Die Stellklappe 10 umfasst einen rohrartigen Klappenkörper 12, in welchem eine an einer Schwenkwelle 14 getragene Klappenblende 16 um eine Schwenkachse S schwenkbar getragen ist.

An der Außenseite des rohrartigen Klappenkörpers 12 ist eine allgemein mit 18 bezeichnete Fixierformation vorgesehen, über welche ein Schwenkantrieb 20 am Klappenkörper 12 festgelegt werden kann. Die Fixierformation 18 umfasst ein in nachfolgend beschriebener Art und Weise den Schwenkantrieb 20 aufnehmendes plattenartiges bzw. schalenartiges Fixierteil 22, das über einen U-förmigen Träger 23 mit zwei Schenkeln 24, 26 an den Klappenkörper 12 angebunden ist. In einem von dem Träger 23 und dem Fixierteil 22 umgebenen Raumbereich ist die Schwenkwelle 14 mit einem aus einem Antriebsgehäuse 28 des Schwenkantriebs 20 hervorstehenden Antriebsorgan 30 des Schwenkantriebs 20 zur gemeinsamen Drehung gekoppelt. Hierzu kann ein in eine ringartige Formation gebogenes, blattfederartig ausgebildetes Kopplungselement 32 genutzt werden, in welches ein Kopplungsendbereich 34 der Schwenkwelle 14 sowie ein Kopplungsendbereich 36 des Antriebsorgans 30 formschlüssig eingreifen. Es sei hier darauf hingewiesen, dass auch andere bauliche Ausgestaltungen zur Herstellung einer Drehkopplung zwischen dem Antriebsorgan 30 und der Schwenkwelle 14 genutzt werden können.

Der Schwenkantrieb 20 wird durch eine mit einem Bajonettverschluss 38 ausgebildete Fixieranordnung 40 an die Fixierformation 18 und somit den Klappenkörper 12 angebunden. Der Bajonettverschluss 38 umfasst an einem vom Antriebsgehäuse 28 des Schwenkantriebs 20 hervorstehenden Fixieransatz 42 eine erste Bajonettformation 44. Die erste Bajonettformation 44 wiederum umfasst an dem Fixieransatz 42 im dargestellten Beispiel drei mit gleichmäßigem Winkelabstand zueinander angeordnete Bajonettvorsprünge 46, wobei jeder Bajonettvorsprung 46 eine Fixiereingriffsaussparung 48 bildet, die in einer Umfangsrichtung und nach radial außen offen ist, in der anderen Umfangsrichtung jedoch geschlossen ist. Es sei hier darauf hingewiesen, dass die Umfangsrichtung sich bezieht auf die auch der Drehachse des Antriebsorgans 30 entsprechende Schwenkachse S, welche, wie nachfolgend noch beschrieben, auch eine Fixierdrehachse F bildet.

Im platten- bzw. schalenartigen Fixierteil 22 ist eine Fixieröffnung 50 ausgebildet. Am Fixierteil 22 sind mit gleichmäßigem Umfangsabstand zueinander drei Fixiereingriffsvorsprünge 52 ausgebildet. Die Umfangserstreckung dieser Fixiereingriffsvorsprünge 52 ist derart bemessen, dass jeder Fixiereingriffsvorsprung 52 bei einer Einführbewegung des Fixieransatzes 42 mit seiner daran ausgebildeten ersten Bajonettformation 44 in die Fixieröffnung 50 jeweils in einen zwischen zwei in Umfangsrichtung aufeinanderfolgenden Bajonettvorsprüngen 46 gebildeten Zwischenraum eintreten kann. Der Schwenkantrieb 20 wird mit seinem Fixieransatz 42 so weit in die Fixieröffnung 50 eingeschoben, bis ein am Fixieransatz 42 gebildeter Bodenbereich 54 am Fixierteil 22 anstößt. In der so erlangten Fixiervorbereitungsstellung liegt jeder Fixiereingriffsvorsprung 52 axial ausgerichtet zu einer der Fixiereingriffsaussparungen 48. Nachfolgend kann durch Drehung des Schwenkantriebs 20 bezüglich des Fixierteils 22 und eine Relativdrehung der die Bajonettvorsprünge 46 umfassenden ersten Bajonettformation 44 bezüglich einer die Fixiereingriffsvorsprünge 52 umfassenden zweiten Bajonettformation 56 dafür gesorgt werden, dass die Fixiereingriffsvorsprünge 52 in die Fixiereingriffsaussparungen 48 hinein bewegt werden bis sie an die Fixiereingriffsaussparungen in Umfangsrichtung begrenzenden Bodenbereichen 58 der Bajonettvorsprünge 46 zur Anlage kommen und somit eine weitere Drehung des Schwenkantriebs 20 bezüglich des Fixierteils 22 nicht mehr möglich ist.

Um dafür zu sorgen, dass der auf diese Art und Weise hergestellte Fixiereingriff beibehalten bleibt und eine Verdrehung des Schwenkantriebs 20 bezüglich der Fixierformation 18 nicht auftreten kann, ist eine allgemein mit 60 bezeichnete Blockierformation vorgesehen. Die Blockierformation 60 umfasst am Antriebsgehäuse 28 des Schwenkantriebs 20 eine exzentrisch zur Fixierdrehachse F bzw. zum Fixieransatz 42 ausgebildete Durchgriffsöffnung 62 für ein beispielsweise als Schraubbolzen ausgebildetes Blockierorgan 64. Am Fixierteil 22 ist in Zuordnung zu der Durchgriffsöffnung 62 an einer seitlich abstehenden Lasche 66 eine Eingriffsöffnung 68 vorgesehen, die beispielsweise als Innengewindeöffnung ausgebildet sein kann. Bei hergestelltem Fixiereingriff liegt die Durchgriffsöffnung 62 über der Eingriffsöffnung 68, so dass das Blockierorgan 64 durch die Durchgriffsöffnung 62 hindurch in die Eingriffsöffnung 68 eingeführt, insbesondere eingeschraubt werden kann.

Somit wird durch den vermittels der Fixieranordnung 40 bzw. der beiden Bajonettformationen 44, 56 hergestellten Formschluss und die durch die Blockieranordnung 60 generierte Drehsicherung eine gegen Loslösen gesicherte, stabile Positionierung des Schwenkantriebs an der Fixierformation 18 und somit am Klappenkörper 12 gewährleistet. Da das Antriebsorgan 30 den Fixieransatz 42 durchsetzt und axial über diesen hervorsteht, kann bei Bewegung des Schwenkantriebs 20 in die Fixiervorbereitungsstellung, also beim Einführen des Fixieransatzes 42 mit seiner ersten Bajonettformation 44 in die Fixieröffnung 50, auch die Drehkopplung des Antriebsorgans 30 mit der Schwenkwelle 14 hergestellt werden, so dass bei in der Fixiervorbereitungsstellung positioniertem Schwenkantrieb 20 die Kopplung zwischen dem Antriebsorgan 30 und der Schwenkwelle 14 bereits hergestellt ist. Zur Herstellung dieser Drehkopplung werden die formschlüssig miteinander zu koppelnden Bauteile axial aufeinander zu bewegt, wozu es weiterhin erforderlich sein kann, zumindest eines dieser Bauteile zu verdrehen, um die formschlüssig miteinander zu koppelnden Formationen zueinander auszurichten. Alternativ kann insbesondere dann, wenn ein flexibles, elastisch verformbares Kopplungselement 32 eingesetzt wird, dieses auch erst dann, wenn der Fixiereingriff hergestellt ist und beispielsweise der Schwenkantrieb 20 durch die Blockierformation 60 gegen Verdrehung bezüglich der Fixierformation 18 gesichert ist, das Kopplungselement 32 eingesetzt werden, um durch Herstellung eines Formschlusses bezüglich der Schwenkwelle 14 einerseits und des Antriebsorgans 30 andererseits den Schwenkantrieb 20 mit der Schwenkwelle 14 und somit auch der Klappenblende 16 zu koppeln.

Die erfindungsgemäße Ausgestaltung der Fixieranordnung ist bauraumsparend und ermöglicht einen guten Zugang für weitere Arbeiten, insbesondere um den rohrartigen Klappenkörper an anderen Baugruppen, beispielsweise einer Abgasanlage einer Brennkraftmaschine, festzulegen.

Es ist abschließend darauf hinzuweisen, dass die erfindungsgemäße Ausgestaltung einer Stellklappe auch Anwendung finden kann bei Stellklappen, die in anderen Einsatzgebieten verwendet werden, beispielsweise bei Akustikklappen oder Niederdruck-Abgasrückführungsklappen.

## Patentansprüche

1. Stellklappe, insbesondere Abgasklappe für den Abgasstrom einer Brennkraftmaschine, umfassend einen Klappenkörper (12), eine im Inneren des Klappenkörpers (12) an einer um eine Schwenkachse (S) drehbaren Schwenkwelle (14) getragene Klappenblende (16) und einen Schwenkantrieb (20) mit einem mit der Schwenkwelle (14) zu koppelnden Antriebsorgan (30), ferner umfassend eine Fixieranordnung (40) zur Fixierung des Schwenkantriebs (20) bezüglich des Klappenkörpers (12), wobei die Fixieranordnung (40) einen Bajonettverschluss (38) umfasst, wobei der Bajonettverschluss (38) an einem Antriebsgehäuse (28) des Schwenkantriebs (20) eine erste Bajonettformation (44) und an einer an dem Klappenkörper (12) vorgesehenen Fixierformation (18) eine mit der ersten Bajonettformation (44) durch Relativdrehbewegung aus einer Fixiervorbereitungsstellung um eine Fixierdrehachse (F) in Fixiereingriff bringbare zweite Bajonettformation (56) umfasst,
**dadurch gekennzeichnet,**
- **dass** die Fixierformation (18) ein an dem Klappenkörper (12) getragenes, plattenartiges Fixierteil (22) umfasst,
- **dass** zum Bereitstellen eines axial festen Zusammenhalts die erste Bajonettformation (44) eine Mehrzahl von in Umfangsrichtung um die Fixierdrehachse (F) aufeinanderfolgenden, nach radial außen und in einer Umfangsrichtung bezüglich der Fixierdrehachse (F) offenen, in der anderen Umfangsrichtung geschlossenen Fixiereingriffsaussparungen (48) aufweist und die zweite Bajonettformation (56) in Zuordnung zu jeder Fixiereingriffsaussparung (48) einen durch die Relativ-Drehbewegung in Umfangsrichtung in eine Fixiereingriffsaussparung (48) eingreifend positionierbaren Fixiereingriffsvorsprung (52) umfasst, wobei an dem Fixierteil (22) eine Fixieröffnung (50) vorgesehen ist und die Fixiereingriffsvorsprünge (52) der zweiten Bajonettformation (56) nach radial innen in die Fixieröffnung (50) hervorstehen.

2. Stellklappe nach Anspruch 1, **dadurch gekennzeichnet, dass** die erste Bajonettformation (44) an einem in die Fixieröffnung (50) einführbaren Fixieransatz (42) des Antriebsgehäuses (28) vorgesehen ist.

3. Stellklappe nach Anspruch 2, **dadurch gekennzeichnet, dass** das Antriebsorgan (30) den Fixieransatz (42) durchsetzt.

4. Stellklappe nach einem der Ansprüche 1-3, **dadurch gekennzeichnet, dass** die erste Bajonettformation (44) und die zweite Bajonettformation (56) die Fixierdrehachse (F) ringartig umgebend angeordnet sind, oder/und dass die Fixierdrehachse (F) der Schwenkachse (S) entspricht.

5. Stellklappe nach einem der Ansprüche 1-4, **dadurch gekennzeichnet, dass** eine Blockierformation (60) vorgesehen ist zum Blockieren der beiden Bajonettformationen (44, 56) gegen Drehbewegung bezüglich einander bei hergestelltem Fixiereingriff.

6. Stellklappe nach Anspruch 5, **dadurch gekennzeichnet, dass** die Blockierformation (60) einen das Antriebsgehäuse (28) gegen Drehbewegung um die Fixierdrehachse (F) bezüglich der Fixierformation (18) blockierenden Blockierbolzen (64), vorzugsweise Schraubbolzen, umfasst.

7. Stellklappe nach einem der vorangehenden Ansprüche, **dadurch gekennzeichnet, dass** die Schwenkwelle (14) mit dem Antriebsorgan (30) durch Relativ-Axialbewegung in Richtung der Schwenkachse (S) zur gemeinsamen Drehung um die Schwenkachse zu koppeln ist.

8. Stellklappe nach Anspruch 7, **dadurch gekennzeichnet, dass** bei in der Fixiervorbereitungsstellung bezüglich einander positionierten Bajonettformationen (44, 56) die Schwenkwelle (14) mit dem Antriebsorgan (30) zur gemeinsamen Drehung um die Schwenkachse (S) gekoppelt ist.

## Claims

1. Regulating flap, especially exhaust flap for the exhaust gas stream of an internal combustion engine, comprising a flap body (12), a flap diaphragm (16) in the interior of the flap body (12) carried on a pivot shaft (14) that is rotatable about a pivot axis (S), and a pivot drive (20) with a drive element (30) to be coupled with the pivot shaft (14), further comprising a fixing device (40) for fixing the pivot drive (20) in relation to the flap body (12), the fixing device (40) comprising a quarter-turn fastener (38), wherein the quarter-turn fastener (38) comprises a first quarter-turn formation (44) at a drive housing (28) of the pivot drive (20) and a second quarter-turn formation (56) at a fixing formation (18) provided at the flap body (12), which second quarter-turn formation can be meshed in a fixed manner with the first quarter-turn formation (44) by relative rotary motion about a fixing rotation axis (F) from a fixing preparation position,
**characterized in that**
- the fixing formation (18) comprises a plate-like fixing part (22), which is carried on the flap body (12),
- for providing an axially fixed connection the first quarter-turn formation (44) comprises a plurality of fixing meshing recesses (48) that follow one another about the fixing rotation axis (F) in a circumferential direction and are open radially outwards and in a circumferential direction in relation to the fixing rotation axis (F), closed in the other circumferential direction, and that the second quarter-turn formation (56) comprises in association with each fixing meshing recess (48) a fixing meshing projection (52) which can be positioned in a manner meshing with a fixing meshing recess (48) due to the relative rotary motion in the circumferential direction, wherein a fixing opening (50) is provided at the fixing part (22) and the fixing meshing projections (52) of the second quarter-turn formation (56) protrude into the fixing opening (50) in the radially inward direction.

2. Regulating flap in accordance with claim 1, **characterized in that** the first quarter-turn formation (44) is provided at a fixing attachment (42) of the drive housing (28), which fixing attachment can be inserted into the fixing opening (50).

3. Regulating flap in accordance with claim 2, **characterized in that** the drive element (30) passes through the fixing attachment (42).

4. Regulating flap in accordance with one of the claims 1-3, **characterized in that** the first quarter-turn formation (44) and the second quarter-turn formation (56) are arranged enclosing the fixing rotation axis (F) in a ring-shaped manner, or/and that the fixing rotation axis (F) corresponds to the pivot axis (S).

5. Regulating flap in accordance with one of the claims 1-4, **characterized in that** a blocking formation (60) is provided for blocking the two quarter-turn formations (44, 56) against rotary motion in relation to one another when a fixing meshing has been established.

6. Regulating flap in accordance with claim 5, **characterized in that** the blocking formation (60) comprises a blocking bolt (64), preferably a screw bolt, which blocks the drive housing (28) against rotary motion about the fixing rotation axis (F) in relation to the fixing formation (18).

7. Regulating flap in accordance with one of the above claims, **characterized in that** the pivot shaft (14) is to be coupled with the drive element (30) for joint rotation about the pivot axis by relative axial motion in the direction of the pivot axis (S).

8. Regulating flap in accordance with claim 7, **characterized in that** the pivot shaft (14) is coupled with the drive element (30) for joint rotation about the pivot axis (S) when the quarter-turn formations (44, 56) are positioned in relation to one another in the fixing preparation position.

## Revendications

1. Clapet de régulation, en particulier clapet de gaz d'échappement pour le flux de gaz d'échappement d'un moteur à combustion interne, comprenant un corps de clapet (12), une membrane de clapet (16) supportée sur un arbre de pivotement (14) pouvant tourner autour d'un axe de pivotement (S) à l'intérieur du corps de clapet (12) et un entraînement de pivotement (20) avec un élément d'entraînement (30) à coupler avec l'arbre de pivotement (14), comprenant en outre un dispositif de fixation (40) pour fixer l'entraînement de pivotement (20) par rapport au corps de clapet (12), le dispositif de fixation (40) comprenant une fermeture à baïonnette (38), dans lequel la fermeture à baïonnette (38) comprend une première formation à baïonnette (44) sur un boîtier d'entraînement (28) de l'entraînement de pivotement (20) et une deuxième formation à baïonnette (56) sur une formation de fixation (18) prévue sur le corps de clapet (12), laquelle deuxième formation à baïonnette pouvant être mise en prise de manière fixe avec la première formation à baïonnette (44) par un mouvement de rotation relatif autour d'un axe de rotation de fixation (F) à partir d'une position de préparation de fixation,
**caractérisé en ce que**
- la formation de fixation (18) comprend une partie de fixation en forme de plaque (22), supportée au corps de clapet (12),
- pour réaliser une liaison axialement fixe, la première formation à baïonnette (44) comprend une pluralité d'évidements d'engrènement de fixation (48) qui se succèdent autour de l'axe de rotation de fixation (F) dans une direction circonférentielle et sont ouverts radialement vers l'extérieur et dans une direction circonférentielle par rapport à l'axe de rotation de fixation (F), fermés dans l'autre direction circonférentielle, et que la deuxième formation à baïonnette (56) comprend, en association avec chaque évidement d'engrènement de fixation (48), une saillie d'engrènement de fixation (52) qui peut être positionnée de manière à s'engrener avec un évidement d'engrènement de fixation (48) en raison du mouvement de rotation relatif dans la direction circonférentielle, dans lequel une ouverture de fixation (50) est prévue sur la partie de fixation (22) et les saillies d'engrènement de fixation (52) de la deuxième formation à baïonnette (56) font saillie dans l'ouverture de fixation (50) dans la direction radiale vers l'intérieur.

2. Clapet de régulation selon la revendication 1, **caractérisé en ce que** la première formation à baïonnette (44) est prévue sur une saillie de fixation (42) du boîtier d'entraînement (28) qui peut être insérée dans l'ouverture de fixation (50).

3. Clapet de régulation selon la revendication 2, **caractérisé en ce que** l'élément d'entraînement (30) passe à travers la saillie de fixation (42).

4. Clapet de régulation selon l'une des revendications 1 à 3, **caractérisé en ce que** la première formation à baïonnette (44) et la deuxième formation à baïonnette (56) sont disposées de manière à entourer l'axe de rotation de fixation (F) de manière annulaire, et/ou **en ce que** l'axe de rotation de fixation (F) correspond à l'axe de pivotement (S).

5. Clapet de régulation selon l'une des revendications 1 à 4, **caractérisé en ce qu'**une formation de blocage (60) est prévue pour bloquer les deux formations à baïonnette (44, 56) contre un mouvement de rotation l'une par rapport à l'autre lorsqu'un engrènement de fixation a été établi.

6. Clapet de régulation selon la revendication 5, **caractérisé en ce que** la formation de blocage (60) comprend un boulon de blocage (64), de préférence un boulon fileté, qui bloque le boîtier d'entraînement (28) contre un mouvement de rotation autour de l'axe de rotation de fixation (F) par rapport à la formation de fixation (18).

7. Clapet de régulation selon l'une des revendications précédentes, **caractérisé en ce que** l'arbre de pivotement (14) doit être couplé à l'élément d'entraînement (30) pour une rotation commune autour de l'axe de pivotement par un mouvement axial relatif dans la direction de l'axe de pivotement (S).

8. Clapet de régulation selon la revendication 7, **caractérisé en ce que** l'arbre de pivotement (14) est couplé à l'élément d'entraînement (30) pour la rotation commune autour de l'axe de pivotement (S) lorsque les formations à baïonnette (44, 56) sont positionnées l'une par rapport à l'autre dans la position de préparation de fixation.
